(19) **Europäisches Patentamt / European Patent Office / Office européen des brevets**

(11) **EP 2 982 990 B1**

(12) **EUROPEAN PATENT SPECIFICATION**

(45) Date of publication and mention
of the grant of the patent:
**04.04.2018 Bulletin 2018/14**

(21) Application number: **15177729.9**

(22) Date of filing: **21.07.2015**

(51) Int Cl.:
***G01P 3/80*** (2006.01)

(54) **MOVEMENT INFORMATION MEASURING DEVICE**

BEWEGUNGSINFORMATIONSMESSVORRICHTUNG

DISPOSITIF DE MESURE D'INFORMATIONS DE MOUVEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.08.2014 JP 2014158478**

(43) Date of publication of application:
**10.02.2016 Bulletin 2016/06**

(73) Proprietor: **Ricoh Company, Ltd.
Tokyo 143-8555 (JP)**

(72) Inventors:
• **TAKAURA, Atsushi
Ohta-ku, Tokyo 143-8555 (JP)**
• **KUDO, Koichi
Ohta-ku, Tokyo 143-8555 (JP)**

(74) Representative: **J A Kemp
14 South Square
Gray's Inn
London WC1R 5JJ (GB)**

(56) References cited:
**EP-A1- 1 703 249          EP-A1- 2 270 517
WO-A2-2006/065461     US-A1- 2004 130 532**

• **BAZYLEV N B ET AL: "PEMFCs flow
microstructure analysis by advanced speckle
technologies", INTERNATIONAL JOURNAL OF
HEAT AND MASS TRANSFER, PERGAMON
PRESS, GB, vol. 54, no. 11, 13 January 2011
(2011-01-13), pages 2341-2348, XP028370507,
ISSN: 0017-9310, DOI:
10.1016/J.IJHEATMASSTRANSFER.2011.02.028
[retrieved on 2011-02-08]**

EP 2 982 990 B1

Printed by Jouve, 75001 PARIS (FR)

**Description**

BACKGROUND OF THE INVENTION

Field of the Invention

The present invention relates to a movement information measuring device, an apparatus, and a traveling body, and more specifically, relates to a movement information measuring device for measuring movement information of a target object using light, and an apparatus and a traveling body that include the movement information measuring device.

Description of the Related Art

If a target object having minute irregularities on its surface is irradiated with coherent light, a speckle pattern is generated on the surface of the target object and in a space near the surface. This speckle pattern is generated due to mutual interference of light reflected from the surface of the target object, and is a pattern tailored to the irregularities of the surface.
In addition, if the target object moves, the speckle pattern also moves according to the movement. Thus, there has been devised an apparatus (a movement information measuring device) for measuring movement information of a target object by utilizing such a mechanism. In this specification, movement information refers to information about movement, and includes at least either of a movement amount and a movement velocity.
For example, JP-2010-55064-A discloses a velocity detection apparatus including a laser light source, an area sensor, an image pattern acquisition means, and a velocity calculation means. The image pattern acquisition means irradiates a moving member with a beam emitted from the laser light source. The image pattern acquisition means then focuses resultant scattered light on the area sensor via a lens, and acquires an image pattern at a certain time interval along with movement of the moving member. The velocity calculation means calculates a velocity of the moving member by calculating the image pattern acquired by the image pattern acquisition means.
It has been, however, difficult for conventional movement information measuring devices to stably measure movement information of a target object with high accuracy.
WO 2006/065461 A2 discloses a method of measuring movement of a speckle pattern for use in a computer mouse.
EP 2 270 517 A1 discloses a system for measuring the speed of movement of a belt in an image forming apparatus.
EP 1 703 249 A1 discloses an apparatus for calibrating a displacement transducer.

SUMMARY OF THE INVENTION

In an aspect of the present invention, there is provided a movement information measuring device for measuring movement information of a target object as defined in the appended claims.
According to a movement information measuring device of the present invention, movement information of a target object can be stably measured with high accuracy.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a diagram for schematically illustrating a configuration of a color printer according to an embodiment of the present invention;
FIG. 2 is a diagram for illustrating a configuration of a movement information measuring device;
FIG. 3 is a diagram for illustrating a relationship between a sub pixel movement amount and a measurement error that are obtained when a movement velocity of a target object is $125\pm5$ (mm/sec), a frame rate is 760.803 (fps), an exposure time is 86.8 ($\mu$sec), and light emission power of a light source 101 is 17 (mW);
FIG. 4 is a diagram for illustrating a relationship between a sub pixel movement amount and a measurement error that are obtained when a movement velocity of a target object is $125\pm5$ (mm/sec), a frame rate is 876.578 (fps), an exposure time is 86.8 ($\mu$sec), and light emission power of the light source 101 is 17 (mW);
FIG. 5 is a diagram for illustrating a relationship between a sub pixel movement amount and a measurement error that are obtained when a movement velocity of a target object is $70\pm2$ (mm/sec), a frame rate is 445.553 (fps), an exposure time is 124.0 ($\mu$sec), and light emission power of the light source 101 is 11.42 (mW);

FIG. 6 is a diagram for illustrating a relationship between a sub pixel movement amount and a measurement error that are obtained when a movement velocity of a target object is 48.1 to 51.0 (mm/sec), a frame rate is 320.02 (fps), an exposure time is 173.6 ($\mu$sec), and light emission power of the light source 101 is 7.85 (mW);

FIG. 7 is a diagram for illustrating a relationship between a sub pixel movement amount and a measurement error that are obtained when a movement velocity of a target amount and a measurement error that are obtained when a movement velocity of a target object is 125$\pm$5 (mm/sec), a frame rate is 320.02 (fps), an exposure time is 86.8 ($\mu$sec), and light emission power of the light source 101 is 16.8 (mW);

FIG. 8 is a diagram for illustrating a relationship between a sub pixel movement amount and a measurement error that are obtained when a movement velocity of a target object is 125$\pm$5 (mm/sec), a frame rate is 321.295 (fps), an exposure time is 86.8 ($\mu$sec), and light emission power of the light source 101 is 16.8 (mW);

FIG. 9 is a diagram for illustrating a relationship between a sub pixel movement amount and a measurement error that are obtained when a movement velocity of a target object is 28.1 to 30.5 (mm/sec), a frame rate is 191.556 (fps), an exposure time is 285.2 ($\mu$sec), and light emission power of the light source 101 is 4.85 (mW);

FIG. 10 is a diagram for illustrating a relationship between a sub pixel movement amount and a measurement error that are obtained when a movement velocity of a target object is 28.1 to 30.5 (mm/sec), a frame rate is 91.4344 (fps), an exposure time is 86.8 ($\mu$sec), and light emission power of the light source 101 is 16.8 (mW);

FIG. 11 is a diagram for illustrating a relationship between a movement velocity of a target object and an optimum frame rate;

FIG. 12 is a diagram for illustrating a relationship between a movement velocity of a target object and an optimum exposure time;

FIG. 13 is a diagram for illustrating a relationship between a movement velocity of a target object and optimum light emission power;

FIG. 14 is a diagram for illustrating fitting of a sine function;

FIG. 15 is a first flowchart for illustrating a movement information measurement process;

FIG. 16 is a second flowchart for illustrating a movement information measurement process;

FIG. 17 is a diagram for illustrating a color printer that is further provided with a movement information measuring device 10 for measuring movement information of an intermediate transfer belt 2040;

FIG. 18 is a diagram for illustrating an image forming apparatus of a direct transfer system;

FIG. 19 is a diagram for illustrating an image forming apparatus for performing a printing/recording operation on a recording sheet by a print head; and

FIG. 20 is a diagram for illustrating conveyance of a recording sheet in the image forming apparatus illustrated in FIG. 19.

The accompanying drawings are intended to depict embodiments of the present invention and should not be interpreted to limit the scope thereof. The accompanying drawings are not to be considered as drawn to scale unless explicitly noted.

DETAILED DESCRIPTION OF THE INVENTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing embodiments shown in the drawings, specific terminology is employed for the sake of clarity. However, the present disclosure is not intended to be limited to the specific terminology so selected and it is to be understood that each specific element includes all technical equivalents that operate in a similar manner.

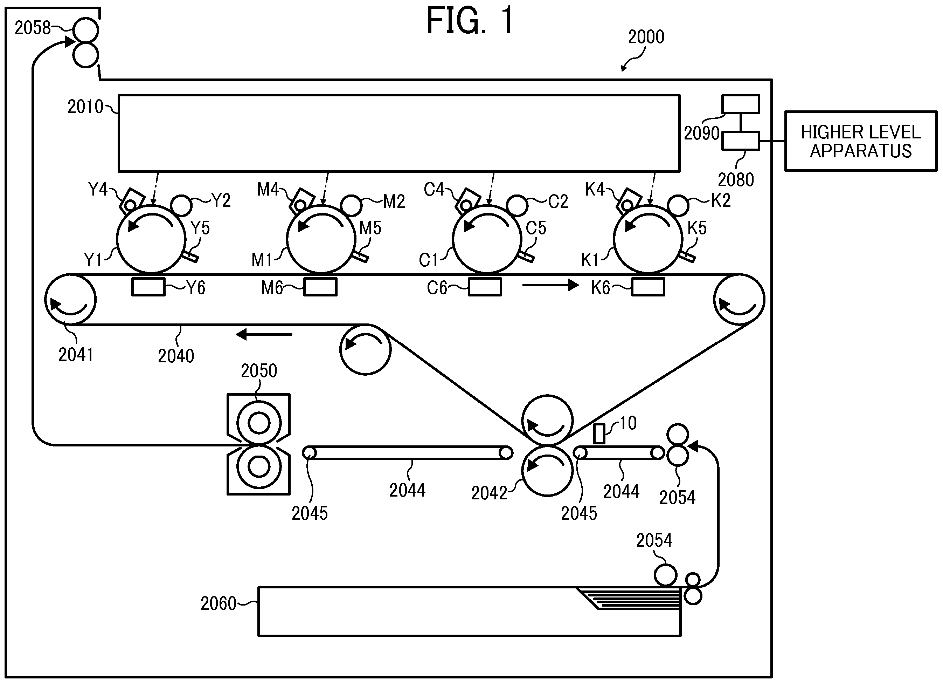

An embodiment of the present invention will be described below based on FIGs. 1 to 16. FIG. 1 schematically illustrates a configuration of a color printer 2000 serving as an apparatus according to an embodiment.

This color printer 2000 is a tandem system color printer for forming a multicolored color image by overlaying four colors (black, cyan, magenta, and yellow). The color printer 2000 includes, for example, four photoconductor drums (K1, C1, M1, and Y1), four drum charging devices (K2, C2, M2, and Y2), four developing devices (K4, C4, M4, and Y4), four drum cleaning devices (K5, C5, M5, and Y5), four transfer devices (K6, C6, M6, and Y6), an optical scanning device 2010, an intermediate transfer belt 2040, a transfer roller 2042, a conveyance device 2044, a fixing device 2050, paper feeding rollers 2054, paper ejection rollers 2058, a paper feeding tray 2060, a communication control device 2080, a movement information measuring device 10, and a printer control device 2090 for comprehensively controlling the above-described components.

The communication control device 2080 controls two-way communication with a higher-level apparatus (e.g., personal computer) via a network or the like.

The printer control device 2090 includes, for example, a central processing unit (CPU), a read-only memory (ROM), a random access memory (RAM), an amplifier circuit, and an analog-to-digital (AD) converter. The ROM stores a program described in codes decodable by the CPU, and various types of data to be used when the program is executed. The RAM serves as a work memory for the CPU. The AD converter converts an analog signal into a digital signal. In addition, the printer control device 2090 transmits image information from a higher-level apparatus to the optical scanning device 2010.

The photoconductor drum K1, the drum charging device K2, the developing device K4, the drum cleaning device K5, and the transfer device K6 are used as a set so as to constitute an image forming station for forming a black image (hereinafter, also referred to as a "K station" for the sake of convenience).

The photoconductor drum C1, the drum charging device C2, the developing device C4, the drum cleaning device C5, and the transfer device C6 are used as a set so as to constitute an image forming station for forming a cyan image (hereinafter, also referred to as a "C station" for the sake of convenience).

The photoconductor drum M1, the drum charging device M2, the developing device M4, the drum cleaning device M5, and the transfer device M6 are used as a set so as to constitute an image forming station for forming a magenta image (hereinafter, also referred to as an "M station" for the sake of convenience).

The photoconductor drum Y1, the drum charging device Y2, the developing device Y4, the drum cleaning device Y5, and the transfer device Y6 are used as a set so as to constitute an image forming station for forming a yellow image (hereinafter, also referred to as a "Y station" for the sake of convenience).

The photoconductor drums each include a photosensitive layer formed on its surface. Each of the photoconductor drums is rotated by a rotational mechanism in a direction indicated by an arrow on a plane in FIG. 1.

The drum charging devices uniformly charge the surfaces of the respective photoconductor drums.

The optical scanning device 2010 scans the surfaces of the respective charged photoconductor drums with light modulated for respective colors based on respective pieces of image information of multiple colors (black image information, cyan image information, magenta image information, and yellow image information) from the printer control device 2090. In other words, the surface of the photoconductor drums each serve as a scanned surface. As a result, latent images corresponding to the respective pieces of image information are formed on the surfaces of the respective photoconductor drums. The latent images formed at this times move toward the directions of the respective developing devices in accordance with the rotation of the photoconductor drums.

The developing device K4 adheres black toner to the latent image formed on the surface of the photoconductor drum K1 to visualize the latent image.

The developing device C4 adheres cyan toner to the latent image formed on the surface of the photoconductor drum C1 to visualize the latent image.

The developing device M4 adheres magenta toner to the latent image formed on the surface of the photoconductor drum M1 to visualize the latent image.

The developing device Y4 adheres yellow toner to the latent image formed on the surface of the photoconductor drum Y1 to visualize the latent image.

The images (hereinafter, also referred to as "toner images" for the sake of convenience) to which respective colors of toner are adhered by the respective developing devices move toward the directions of the respective transfer device in accordance with the rotation of the photoconductor drums.

The transfer devices transfer the respective toner images onto the intermediate transfer belt 2040. This intermediate transfer belt 2040 is moved by a drive roller 2041 in directions indicated by arrows in FIG. 1. In this example, the respective toner images of yellow, magenta cyan, and black are sequentially transferred onto the intermediate transfer belt 2040 at predetermined timings, and overlaid on one another, so that a color image is formed.

Recording sheets are stored in the paper feeding tray 2060. The paper feeding rollers 2054 are disposed near the paper feeding tray 2060. One of the paper feeding rollers 2054 takes out the recording sheets from the paper feeding tray 2060 one by one. The recording sheet is fed toward a nip between the intermediate transfer belt 2040 and the transfer roller 2042 at a predetermined timing, by the other paper feeding rollers 2054. As a result, the toner image on the intermediate transfer belt 2040 is transferred onto the recording sheet. The recording sheet on which the toner image is transferred is fed to the fixing device 2050 via the conveyance device 2044.

At the fixing device 2050, heat and pressure are applied to the recording sheet, whereby the toner is fixed onto the recording sheet. The recording sheets on which toner is fixed are fed to a paper ejection tray via the paper ejection roller 2058 to be sequentially stacked on the paper ejection tray.

The drum cleaning devices remove toner (residual toner) remaining on the surfaces of the respective photoconductor drums. The residual toner is removed from the surfaces of the photoconductor drums, and the toner-removed photoconductor drums return again to the positions facing the respective charging devices.

The movement information measuring device 10 outputs a signal including movement information of the recording sheet conveyed by the conveyance device 2044. In other words, in this example, the recording sheet serves as a target object of the movement information measuring device 10. The output signal from the movement information measuring device 10 is transmitted to the printer control device 2090.

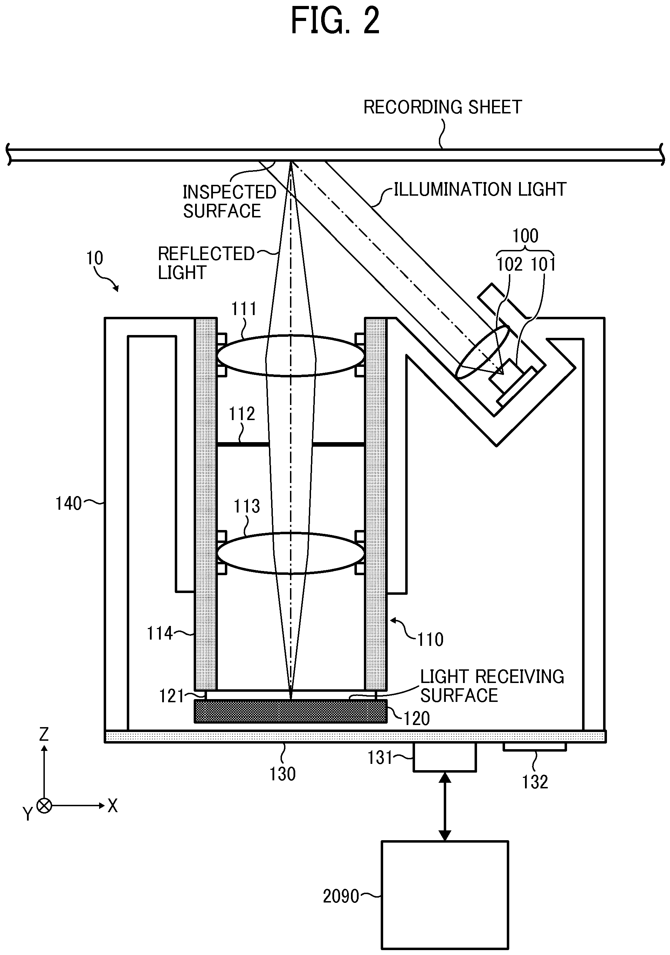

As illustrated in FIG. 2 as an example, this movement information measuring device 10 includes, for example, an illumination system 100, an imaging optical system 110, an image sensor 120, a cover glass 121, a substrate 130, a processor 131, a light source driving integrated circuit (IC) chip 132, and a casing 140. In this example, the movement information measuring device 10 is assumed to be disposed in a -Z side of the recording sheet in an XYZ three-dimensional orthogonal coordinate system. In addition, the surface of the recording sheet is orthogonal to a Z-axis direction.

The illumination system 100 includes a light source 101 and a coupling lens 102, and illuminates the recording sheet surface on the -Z side. Hereinafter, a portion on the recording sheet that is illuminated with light from the illumination system 100 will be also referred to as a surface to be inspected ("inspected surface").

The light source 101 includes a laser diode (LD) having an oscillation wavelength of 655 nm, and emits coherent light onto the intermediate transfer belt 2040. The light source 101 is controlled and driven by a drive signal output from the light source driving IC chip 132 according to an instruction of the processor 131.

The coupling lens 102 is disposed on an optical path of light emitted from the light source 101 so as to make the emitted light substantially parallel light. The light passing through the coupling lens 102 is light (illumination light) emitted from the illumination system 100.

The imaging optical system 110 includes a first lens 111, an aperture 112, a second lens 113, and a lens barrel 114 for holding these components at a predetermined positional relationship. Light reflected from the inspected surface enters the imaging optical system 110. The first lens 111, the aperture 112, and the second lens 113 are in an optically-telecentric arrangement. In addition, optical axes of the first lens 111, the aperture 112, and the second lens 113 are orthogonal to the inspected surface.

In this example, an image forming magnification of the imaging optical system 110 is 0.88771.

The image sensor 120 has a light receiving surface including a plurality of light receiving portions (hereinafter, referred to as "pixels") on the +Z side. This light receiving surface is protected by the cover glass 121. In addition, the cover glass 121 is fixed to the -Z side end portion of the lens barrel 114. In other words, the image sensor 120 is fixed to the lens barrel 114 via the cover glass 121.
sensor is used as the image sensor 120. This CMOS sensor has a pixel pitch of 7.4 $\mu$m.

The imaging optical system 110 is set so that an image of a speckle pattern generated when the illumination system 100 illuminates the inspected surface is formed on the light receiving surface of the image sensor 120.

Thus, the image sensor 120 captures an image of the speckle pattern. Hereinafter, the image of the speckle pattern that is captured by the image sensor 120 will be also referred to as a "speckle pattern image" for the sake of convenience. The speckle pattern image is transmitted to the processor 131.

In addition, when an inverted real image is formed by the imaging optical system 110, for example, if a target object moves in a +Y direction, the image of the speckle pattern on the light receiving surface moves in a -Y direction.

The substrate 130 is a so-called circuit substrate. The image sensor 120, the processor 131, and the light source driving IC chip 132 are mounted on the substrate 130.

The casing 140 holds the illumination system 100, the imaging optical system 110, and the substrate 130.

The processor 131 includes a Field Programmable Gate Array (FPGA), which is a programmable device. The processor 131 can perform two-way communication with the printer control device 2090.

The processor 131 can set a frame rate and an exposure time in the image sensor 120, and light emission power of the light source 101.

In addition, during measurement, a plurality of the speckle pattern images is transmitted from the image sensor 120 to the processor 131 at a time interval according to a set frame rate. Hereinafter, an n-th speckle pattern image transmitted to the processor 131 during the measurement will be indicated as a speckle pattern image G (n) for making explanation easily understandable.

Upon receiving the speckle pattern image G(n) from the image sensor 120, the processor 131 obtains, for each pixel, a correlation strength with a speckle pattern image G(n-1) which has been received prior to the speckle pattern image G(n). At this time, the processor 131 remove a background noise component through filtering. More specifically, discrete Fourier transform is first performed for each of the two speckle pattern images G(n) and G(n-1), which are temporally and spatially close to each other. In correlation strengths on a frequency space that is obtained by multiplying the obtained value of the speckle pattern image G(n) by that of the speckle pattern image G(n-1), a correlation strength of a pixel within a filtering target frequency band is multiplied by a filtering coefficient, thereby removing the background noise component.
background noise component.

Next, the processor 131 performs fitting of an area including a portion where a correlation strength is expected to be at peak in the relationship between a correlation strength and a pixel position, using a predetermined function (hereinafter, also referred to a "fitting function"). In this example, a conformal parabola fitting function with the smallest error is used as a fitting function (Takaura and five others, "Development of Laser Speckle-Based Displacement Sensor with High Accuracy," Ricoh Technical Report, January 2014, No.39, p. 40-48). Hereinafter, a pixel position where a correlation strength is at peak will be simply referred to as a "peak position."

The processor 131 obtains a peak position using the above-described fitting function. As a result, the peak position can be obtained at a resolution smaller than a pixel pitch. Thus, when the pixel position is represented in terms of the pixel pitch, the peak position has a fractional value. In addition, since image information is obtained on a pixel basis, the precision of the peak position does not become equal to or smaller than the pixel pitch when fitting is not performed.

The processor 131 then obtains a "movement amount of the peak position," which is a difference between the obtained peak position and a peak position obtainable when the target object is assumed to be not moving. At this time, since the peak position has a fractional value, the movement amount of the peak position also has a fractional value. In the present embodiment, a fractional value in the movement amount of the peak position will be also referred to as a "sub pixel movement amount" for the sake of convenience. In this example, the unit of this sub pixel movement amount is represented as a [pixel/frame].

Subsequently, the processor 131 corrects the movement amount of the peak position based on the sub pixel movement amount. Furthermore, the processor 131 performs magnification correction calculation on the corrected movement amount of the peak position to obtain the movement amount of the target object. The correction of the movement amount of the peak position and the magnification correction calculation will be described later.

The processor 131 outputs, to the printer control device 2090, the obtained movement amount of the target object and a frame number n of the speckle pattern image G (n) as a set. In addition, the processor 131 can output these pieces of data not only to the printer control device 2090 but also to any destination through a general-purpose interface bus (GPIB) or in an IMAC format.

The measurement error of the movement amount of the target object will now be described.

The target object is placed on a linear stage having a positioning accuracy of 0.2 ($\mu$m) and a repetitive positioning accuracy of $\pm 0.1$ ($\mu$m), and the movement information measuring device 10 measures the movement amount of the target object while moving the linear stage. The processor 131 is, however, assumed to not perform the above-described correction of the movement amount of the peak position. In addition, a difference between the measurement result obtained at this time and the movement amount of the linear stage is regarded as a measurement error of the movement amount of the target object. In this example, the movement amount of the linear stage is assumed to be 10 mm. In this case, the repetitive accuracy of the movement amount of the linear stage is $\pm 0.001$ (%). This repetitive accuracy is higher by one digit than a repetitive accuracy of the movement information measuring device 10.

Hereinafter, the measurement error of the movement amount of the target object will also be simply referred to as a "measurement error" to avoid complexity.

First, an experiment about influences of a frame rate of the image sensor 120, an exposure time taken for obtaining the speckle pattern image, and light emission power of the light source 101 that are exerted on the relationship between the sub pixel movement amount and the measurement error was conducted.

"Experiment 1"

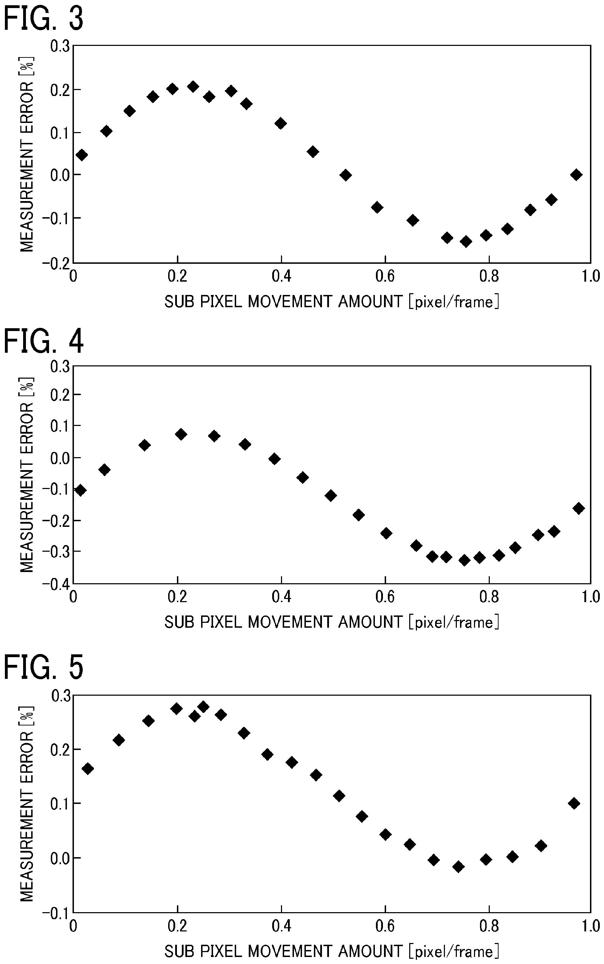

FIG. 3 illustrates a relationship between a measurement error and a sub pixel movement amount that were obtained when a frame rate was 760.803 (fps), an exposure time was 86.8 ($\mu$sec), and light emission power of the light source 101 was 17 (mW), and the measurement error was obtained while changing a movement velocity of the linear stage by a minute amount within the range of 120 (mm/sec) to 130 (mm/sec). At this time, the variation of the measurement error indicates sinusoidal characteristics with one phase cycle in which the measurement error becomes 0 when the sub pixel movement amount is a whole-number multiple of 1/2 of the pixel pitch.

"Experiment 2"

FIG. 4 illustrates a relationship between a measurement error and a sub pixel movement amount that were obtained when a frame rate was 876.578 (fps), an exposure time was 86.8 ($\mu$sec), and light emission power of the light source 101 was 17 (mW), and the measurement error was obtained while changing a movement velocity of the linear stage by a minute amount within the range of 130 (mm/sec) to 140 (mm/sec). At this time, the variation of the measurement error indicates sinusoidal characteristics with one phase cycle. In this experiment, the minute amount is about 0.1 mm/sec.

"Experiment 3"

FIG. 5 illustrates a relationship between a measurement error and a sub pixel movement amount that were obtained when a frame rate was 445.553 (fps), an exposure time was 124.0 (µsec), and light emission power of the light source 101 was 11.42 (mW), and the measurement error was obtained while changing a movement velocity of the linear stage by a minute amount within the range of 68 (mm/sec) to 72 (mm/sec). At this time, the variation of the measurement error indicates sinusoidal characteristics with one phase cycle. In this experiment, the minute amount is about 0.1 mm/sec.

"Experiment 4"

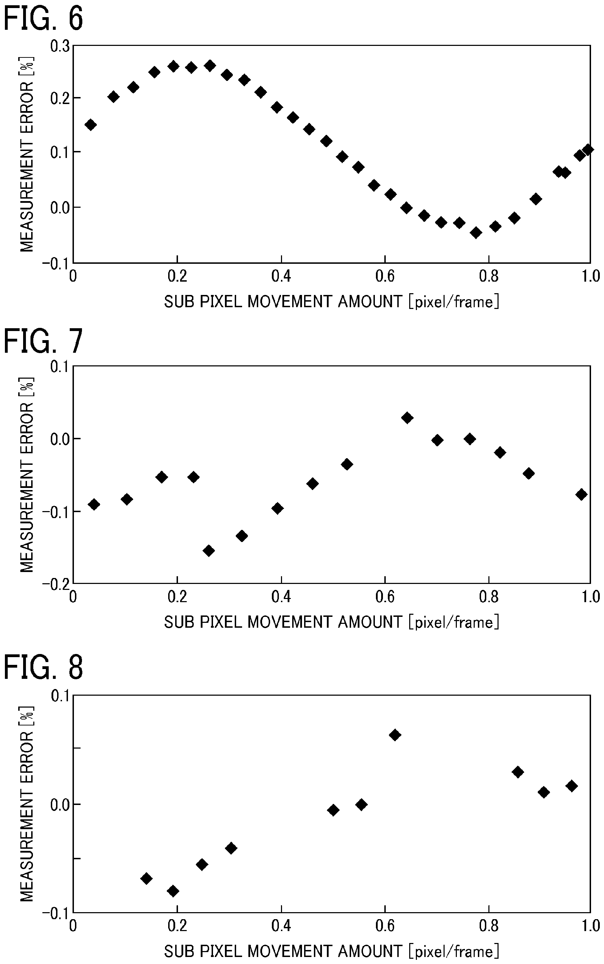

FIG. 6 illustrates a relationship between a measurement error and a sub pixel movement amount that were obtained when a frame rate was 320.02 (fps), an exposure time was 173.6 (µsec), and light emission power of the light source 101 was 7.85 (mW), and the measurement error was obtained while changing a movement velocity of the linear stage by a minute amount within the range of 48.1 (mm/sec) to 51.0 (mm/sec). At this time, the variation characteristics of the sub pixel error indicate sinusoidal characteristics with one phase cycle. In this experiment, the minute amount is about 0.1 mm/sec.

"Experiment 5"

FIG. 7 illustrates a relationship between a measurement error and a sub pixel movement amount that were obtained when a frame rate was 320.02 (fps), an exposure time was 86.8 (µsec), and light emission power of the light source 101 was 16.8 (mW), and the measurement error was obtained while changing a movement velocity of the linear stage by a minute amount within the range of 120 (mm/sec) to 130 (mm/sec). At this time, the variation of the measurement error does not indicate sinusoidal characteristics.

"Experiment 6"

FIG. 8 illustrates a relationship between a measurement error and a sub pixel movement amount that were obtained when a frame rate was 321.295 (fps), an exposure time was 86.8 (µsec), and light emission power of the light source 101 was 16.8 (mW), and the measurement error was obtained while changing a movement velocity of the linear stage by a minute amount within the range of 120 (mm/sec) to 130 (mm/sec). At this time, the variation of the measurement error does not indicate sine function characteristics.

"Experiment 7"

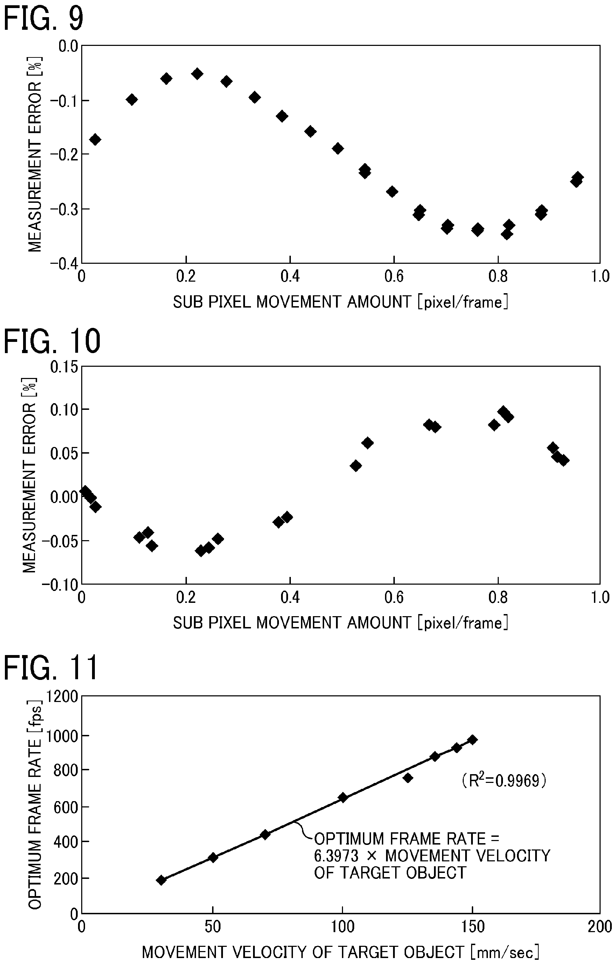

FIG. 9 illustrates a relationship between a measurement error and a sub pixel movement amount that were obtained when a frame rate was 191.556 (fps), an exposure time was 285.2 (µsec), and light emission power of the light source 101 was 4.85 (mW), and the measurement error was obtained while changing a movement velocity of the linear stage by a minute amount within the range of 28.1 (mm/sec) to 30.5 (mm/sec). At this time, the variation of the measurement error indicates sinusoidal characteristics with one phase cycle.

"Experiment 8"

FIG. 10 illustrates a relationship between a measurement error and a sub pixel movement amount that were obtained when a frame rate was 91.4344 (fps), an exposure time was 86.8 (µsec), and light emission power of the light source 101 was 16.8 (mW), and the a measurement error was obtained while changing a movement velocity of the linear stage by a minute amount within the range of 28.1 (mm/sec) to 30.5 (mm/sec). At this time, the variation of the sub pixel error loses sinusoidal characteristics, and the phase is inverted.

From the results of FIGs. 3 to 10, it can be seen that there are cases in which the measurement error sinusoidally varies with respect to the sub pixel movement amount, and cases in which the measurement error does not vary sinusoidally with respect to the sub pixel movement amount. Thus, for the cases in which the measurement error sinusoidally varies with respect to the sub pixel movement amount, a relationship between a movement velocity of the target object and a frame rate, a relationship between a movement velocity of the target object and an exposure time, a relationship between a movement velocity of the target object and light emission power of the light source 101 were analyzed.

Hereinafter, a frame rate, an exposure time, and light emission power of the light source 101 that are set when the measurement error indicates a sinusoidal variation will be also referred to as an "optimum frame rate," an "optimum exposure time," and "optimum light emission power," respectively, for the sake of convenience. In addition, an amplitude of a sine function obtainable when a frame rate is an optimum frame rate, an amplitude of a sine function obtainable when an exposure time is an optimum exposure time, and an amplitude of a sine function obtainable when light emission power is optimum light emission power are substantially the same.

FIG. 11 illustrates a relationship between a movement velocity of the target object and an optimum frame rate that were obtained from the results of various experiments including the above experiments. There is a strong primary correlation between a movement velocity of the target object and an optimum frame rate. In this example, the value of square of a correlation coefficient R is 0.9969, and the following Formula (1) is an approximation formula:

$$\text{optimum frame rate} = 6.3973 \times \text{movement velocity of target object}……(1).$$

Thus, by using the above Formula (1), even for a movement velocity for which an experiment result is not obtained, an optimum frame rate at the movement velocity can be estimated.

If the above Formula (1) is satisfied, the movement amount of the target object becomes approximately equal between frames, regardless of the movement velocity of the target object.

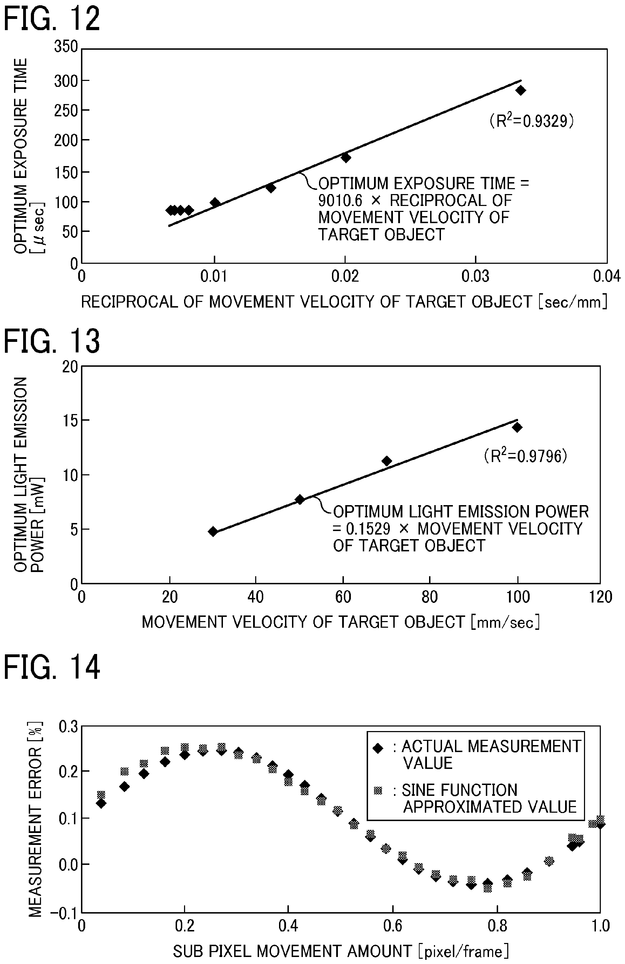

FIG. 12 illustrates a relationship between a reciprocal of a movement velocity of the target object and an optimum exposure time that were obtained from the results of various experiments including the above experiments. There is a high primary correlation between a reciprocal of a movement velocity of the target object and an optimum exposure time, as well. In this example, the value of square of a correlation coefficient R is 0.9329, and the following Formula (2) is an approximation formula:

$$\text{optimum exposure time} = 9010.6 \times \text{reciprocal of movement velocity of target}$$
$$\text{object}……(2).$$

Thus, by using the above Formula (2), even for a movement velocity for which an experiment result is not obtained, an optimum exposure time at the movement velocity can be estimated.

Meanwhile, when an image of a moving object is captured by a camera, if a shutter speed is low, the image of the moving object is blurred in a movement direction. If the image of the moving object is assumed to be a point image, the point image moves while a shutter is open. Thus, an exposed image does not become a point image, and a resultant image is an image flown in the movement direction by an amount corresponding to the movement amount. When the movement amount of the point image that is obtained at this time is defined as an "image flow amount," if the above Formula (2) is satisfied, the image flow amount becomes approximately equal among images of respective frames, regardless of the movement velocity of the moving object.

FIG. 13 illustrates a relationship between a movement velocity of the target object and optimum light emission power of the light source 101 that were obtained from the results of various experiments including the above experiments, as well. There is a high primary correlation between a movement velocity of the target object and optimum light emission power. In this example, the value of square of a correlation coefficient R is 0.9796, and the following Formula (3) is an approximation formula:

$$\text{optimum light emission power} = 0.1529 \times \text{movement velocity of target}$$
$$\text{object}……(3).$$

Thus, by using the above Formula (3), even for a movement velocity for which an experiment result is not obtained, optimum light emission power at the movement velocity can be estimated.

In addition, if light emission power is adjusted so that, in a relationship between a measurement error and a sub pixel movement amount, the variation of the measurement error indicates sinusoidal characteristics with one phase cycle when an exposure time is varied, an accumulated exposure amount on an image sensor becomes a constant value. Thus, it can also be said that light emission power is only required to be adjusted so that the accumulated exposure amount becomes a constant value, when the movement velocity of the target object varies. In this case, an image contrast becomes approximately equal among images of respective frames, regardless of the movement velocity of the target object.

In addition, if a frame rate, an exposure time, and light emission power of the light source 101 are adjusted to be an "optimum frame rate," an "optimum exposure time," and "optimum light emission power," respectively, a relationship between a measurement error and a sub pixel movement amount can be fitted by a sine function.

FIG. 14 illustrates an example of a result obtained by fitting, by a sine function, a relationship between a measurement error and a sub pixel movement amount that were obtained when a frame rate was 320.02 (fps), an exposure time was 173.6 ($\mu$sec), and light emission power of the light source 101 was 7.85 (mW), and the measurement error was obtained while changing a movement velocity of the linear stage by a minute amount within the range of 48.1 (mm/sec) to 50.1 (mm/sec). The number of actual measurement values obtained at this time was 30. An average fitting error of the 30 actual measurement values was extremely small, specifically, 0.004%, and remained within $\pm$0.023% at most.

Sine functions representing a relationship between a movement velocity of the target object and an optimum frame rate, a relationship between a movement velocity of the target object and an optimum exposure time, a relationship between a movement velocity of the target object and optimum light emission power of the light source 101, and a relationship between a measurement error and a sub pixel movement amount are obtained in advance through experiments, and stored in a memory of the processor 131.

Next, the description will be given of the above-described correction of the movement amount of the peak position that is performed by the processor 131.

If the processor 131 obtains the movement amount of the peak position, the processor 131 refers to a sine function stored in the memory, and obtains a measurement error corresponding to a sub pixel movement amount obtainable when the movement amount is at the peak position. The processor 131 then corrects the movement amount of the peak position so that the measurement error is canceled out.

Next, the description will be given of the above-described magnification correction calculation that is performed by the processor 131.

The magnification correction calculation is necessary calculation for obtaining a movement velocity of the inspected surface for the following reason. When an image forming magnification of the imaging optical system 110 is denoted by M and a movement velocity of a speckle pattern on the inspected surface is denoted by V1, a movement velocity V2 of the image of the speckle pattern on the light receiving surface of the image sensor 120 becomes V2 = -M $\times$ V1.

Thus, the processor 131 performs magnification correction calculation by multiplying the corrected movement amount of the peak position by (-1/M).

If a print job is requested, the printer control device 2090 outputs a measurement request to the processor 131. Then, upon receiving the measurement request, the processor 131 starts a movement information measurement process.

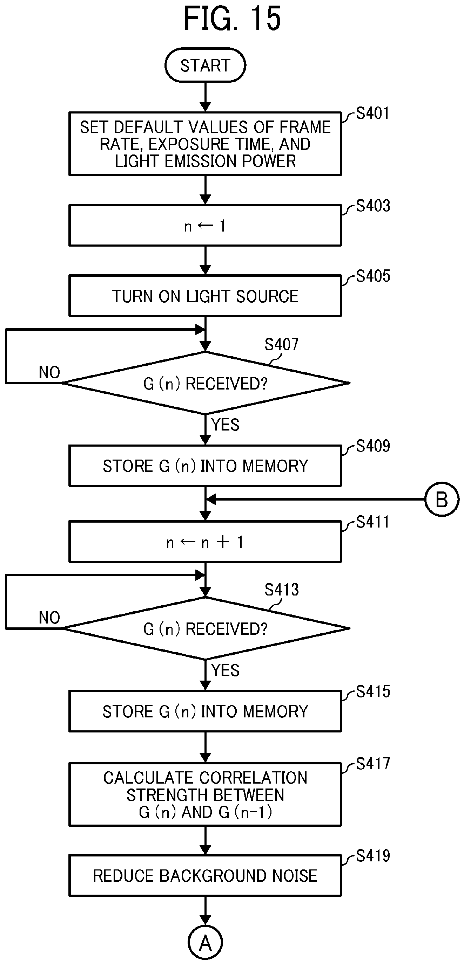

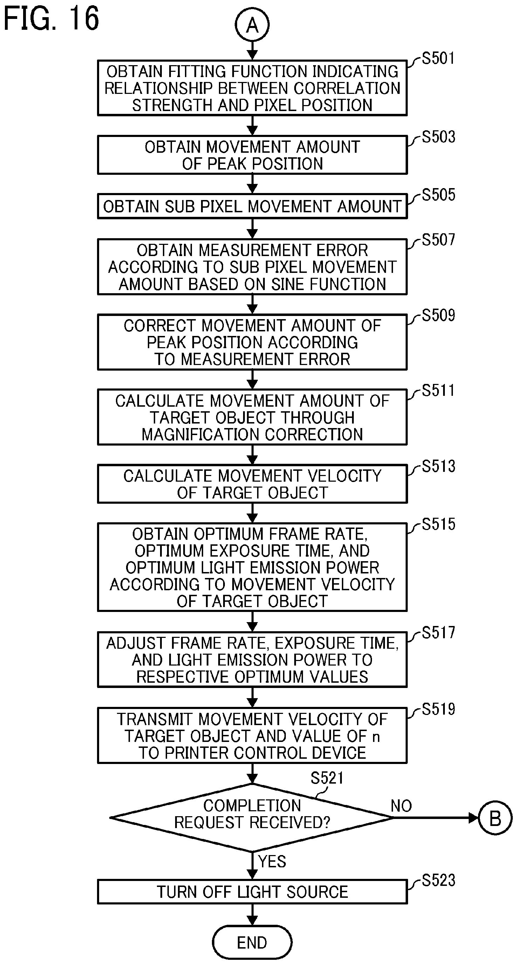

The movement information measurement process performed by the processor 131 will be described with reference to flowcharts illustrated in FIGs. 15 and 16.

First, in step S401, the processor 131 sets respective default values of a frame rate, an exposure time, and light emission power of the light source 101.

Next, in step S403, the processor 131 sets a variable n that stores a frame number to 1 as an initial value.

Next, in step S405, the processor 131 turns on the light source 101.

Next, in step S407, the processor 131 waits for the speckle pattern image G (n) to be transmitted from the image sensor 120. When the processor 131 receives the speckle pattern image G (n), the process transitions to step S409.

In this step S409, the processor 131 stores the speckle pattern image G (n) into its memory.

Next, in step S411, the processor 131 increments the value set as the variable n by 1. Thus, the previously-obtained speckle pattern image G would be the speckle pattern image G(n-1).

Next, in step S413, the processor 131 waits for the speckle pattern image G (n) to be transmitted from the image sensor 120. When the processor 131 receives the speckle pattern image G (n), the process proceeds to step S415.

In this step S415, the processor 131 stores the speckle pattern image G (n) into its memory.

Next, in step S417, the processor 131 calculates a correlation strength between the speckle pattern image G (n) and the speckle pattern image G (n-1).

Next, in step S419, the processor 131 reduces a background noise contained in the correlation strength (for example, refer to "Development of Laser Speckle-Based Displacement Sensor with High Accuracy," by Takaura and five others, Ricoh Technical Report, January 2014, No.39, p. 40-48).

Next, in step S501, the processor 131 obtains a fitting function indicating a relationship between a correlation strength and a pixel position.

Next, in step S503, the processor 131 obtains a movement amount of the peak position based on the fitting function.

Next, in step S505, the processor 131 obtains a sub pixel movement amount.

Next, in step S507, the processor 131 refers to a sine function indicating a relationship between a sub pixel movement amount and a measurement error, and obtains a measurement error according to the sub pixel movement amount obtained in step S505.

Next, in step S509, the processor 131 corrects the movement amount of the peak position according to the measurement error obtained in step S507.

Next, in step S511, the processor 131 performs magnification correction calculation to obtain the movement amount of the target object.

Next, in step S513, the processor 131 calculates the movement velocity of the target object from the movement amount of the target object and the frame rate.

Next, in step S515, the processor 131 obtains an optimum frame rate, an optimum exposure time, and optimum light emission power according to the movement velocity of the target object, using the above-described Formulae (1) to (3).

Next, in step S517, the processor 131 adjusts a frame rate, an exposure time, and light emission power of the light source 101 so that the frame rate, the exposure time, and the light emission power of the light source 101 become their respective optimum values.

Next, in step S519, the processor 131 transmits the movement velocity of the target object and the value of the variable n to the printer control device 2090.

Next, in step S521, the processor 131 determines whether or not measurement completion has been received from the printer control device 2090. If the processor 131 has not received measurement completion, negative determination is made in this step, and the process returns to the above-described step S411. On the other hand, if the processor 131 has received measurement completion, positive determination is made in this step, and the process transitions to step S523.

In this step S523, the processor 131 turns off the light source 101. Then, the processor 131 ends the movement information measurement process.

The printer control device 2090 controls, based on movement information from the movement information measuring device 10, drive rollers 2045 of the conveyance device 2044 so that a preset desired movement velocity is maintained.

Meanwhile, when the resolution of an image formed by the color printer 2000 is 300 dpi, 1 dot becomes approximately 84.7 $\mu$m. If an accumulated error of a feed amount of a recording sheet is within $\pm 0.0285\%$, an accumulated error caused when an A4-size recording sheet moves in a longitudinal direction by 297 mm is within $\pm 84.7$ $\mu$m. In this case, a shift between front and back images can be within $\pm 1$ dot line. This is a relatively good level specification.

In the above-described experiments, a measurement error caused by the variation of the movement velocity of the target object is within $\pm 0.023\%$. This is within $\pm 0.0285\%$, which is equivalent to the above-described targeted accumulated error of the feed amount. In addition, in the movement information measuring device 10, measurement errors are sequentially corrected on a frame basis. Thus, dot positional accuracy in a feeding direction is improved. Furthermore, an accumulated error of a feed amount is also improved, so that a shift can be within $\pm 1$ dot line.

In this manner, by using the movement information measuring device 10 whose target object is a recording sheet, a positional shift of an image can be suppressed with high accuracy.

Meanwhile, in some cases, a recording sheet skews by moving in a direction orthogonal to a conveyance direction, aside from a movement amount error in the conveyance direction. In such cases, the skew can also be controlled with high accuracy by the following configuration. For example, a plurality of movement information measuring devices 10 is used to measure movement amounts in the conveyance direction and in the direction orthogonal to the conveyance direction. Alternatively, a difference in movement amount between a plurality of positions spaced from each other in the conveyance direction is measured, and based on the measurement result, feedback control is performed, thereby controlling skew with high accuracy.

As described above, the movement information measuring device 10 according to the present embodiment includes, for example, the illumination system 100, the imaging optical system 110, the image sensor 120, the cover glass 121, the substrate 130, the processor 131, the light source driving IC chip 132, and the casing 140.

The processor 131 adjusts a frame rate, an exposure time, and light emission power of the light source 101 so that, in a relationship between a measurement error and a sub pixel movement amount, the variation of the measurement error indicates sinusoidal characteristics with one phase cycle.

The illumination system 100 causes the light source 101 to emit light at light emission power set by the processor 131 to irradiate the inspected surface with coherent light. The imaging optical system 110 forms, on the light receiving surface of the image sensor 120, the image of the speckle pattern generated by irradiating the inspected surface with coherent light. The image sensor 120 captures the image of the speckle pattern according to a frame rate and an exposure time that are set by the processor 131, and outputs the speckle pattern image to the processor 131.

The processor 131 obtains, for each pixel, a correlation strength between two speckle pattern images, and through fitting, obtains the movement amount of the peak position at a resolution smaller than the pixel pitch. The processor 131 then corrects the movement amount of the peak position based on a sub pixel movement amount. Furthermore, the processor 131 performs magnification correction calculation on the corrected movement amount of the peak position to obtain the movement amount of the target object.

In this case, even if the movement velocity of the target object varies, the movement information measuring device 10 can measure the movement information of the target object with high accuracy. In other words, according to the movement information measuring device 10, movement information of a target object can be stably measured with high accuracy.

In addition, the processor 131 can obtain a movement velocity of the target object between two frames based on a movement amount of the target object between the frames and an elapsed time between the frames.

In addition, the processor 131 can obtain, for three frames, an acceleration based on a movement velocity of the target object between two consecutive frames among the three frames.

In addition, in the above-described embodiment, the first lens 111, the aperture 112, and the second lens 113 are in an optically-telecentric arrangement. In this case, it is not necessary to perform magnification compensation according to the wavelength variation of a light source and a temperature variation, so that troublesome magnification correction can be avoided.

In addition, when the movement velocity of the target object is constant, the movement information measuring device 10 can perform stable measurement with high accuracy with respect to a temperature variation, the wavelength variation of a light source, and a defocus movement of an inspected surface. For example, for a target object a movement velocity of which is controlled at 100 mm/sec, in a process in which a temperature rises from room temperature to about 60°C according to the heat generation of the image sensor 120, the processor 131, and the light source driving IC chip 132, a variation range of a repetitive error was about 0.028%. In addition, a variation range of a repetitive error was 0.008% when a defocus amount of an inspected surface its $\pm 1$ mm.

In addition, when there is no possibility of the wavelength variation of a light source or the temperature variation, the first lens 111, the aperture 112, and the second lens 113 may be in an optically-nontelecentric arrangement.

In addition, since the color printer 2000 includes the movement information measuring device 10, the color printer 2000 can stably obtain a desired movement velocity as a movement velocity of a recording sheet. As a result, a positional shift is suppressed, and a high-quality image can be formed.

In addition, in the above-described movement information measurement process, the description has been given of a case in which respective default values of a frame rate, an exposure time, and light emission power of the light source 101 are set in step S401. This, however, is not to be construed in a limiting sense.

For example, when a predicted movement velocity of a target object is input by a user, a frame rate, an exposure time, and light emission power of the light source 101 may be set according to the input movement velocity.

Alternatively, if a predicted movement velocity of a target object is the same as that in a previous movement information measurement process, for example, a frame rate, an exposure time, and light emission power of the light source 101 that are adjusted last in the previous movement information measurement process may be set.

In addition, in the above-described embodiment, when obtaining movement information of a recording sheet, at least part of processes performed by the processor 131 of the movement information measuring device 10 may be performed by the printer control device 2090, and at least part of processes performed by the printer control device 2090 may be performed by the processor 131 of the movement information measuring device 10.

For example, the above-described magnification correction calculation may be performed by the printer control device 2090. In this case, the processor 131 outputs, to the printer control device 2090, the corrected movement amount of the peak position and a frame number of the speckle pattern image G (n) as a set.

In addition, in the above-described embodiment, a movement velocity in an arbitrary frame number may be estimated from measurement values of movement velocities in two or more frame numbers antecedent to the arbitrary frame number so as to adjust a frame rate, an exposure time, and light emission power of a light source.

For example, measurement may be performed in the following manner. More specifically, an acceleration A is obtained from a movement velocity v1 in a frame number n-1 and a movement velocity v2 in a frame number n. Then, a movement velocity V3 at an acquisition time t3 of the speckle pattern image of a frame number n+1 is predicted from a formula "V3 = V2 + A $\times$ $\Delta$T." The measurement in the time t3 is performed with a frame rate, an exposure time, and light emission power of a light source being adjusted to respective optimum values for the movement velocity V3.

In addition, in the above-described embodiment, there may be provided an input means for the user modifying the above-described Formulae (1), (2), and (3). In this case, the user can periodically examine measurement accuracy of the movement information measuring device 10, and modify at least any one of the above-described Formulae (1), (2), and (3) based on the examination result.

In addition, in the above-described embodiment, a correction coefficient for correcting image forming magnification of the imaging optical system 110 may be obtained in the following manner. First, a target object is moved at a predetermined movement velocity V, using an apparatus having a feeding accuracy equal to or higher than that of the movement information measuring device 10. Then, when measurement is performed using the movement information measuring device 10 in which an optimum frame rate, an optimum exposure time, and optimum light emission power at the movement velocity V are set, the correction coefficient is obtained such that a resultant measurement error becomes zero. This correction coefficient can be used in the magnification correction calculation in the above-described step S511.

In addition, in the above-described embodiment, the description has been given of a case in which the movement information measuring device 10 measures movement information of a recording sheet. This, however, is not to be construed in a limiting sense. For example, the movement information measuring device 10 may measure movement information of the conveyance device 2044. In this case, the printer control device 2090 controls, based on the movement information of the conveyance device 2044 that is obtained from the movement information measuring device 10, the conveyance device 2044 so that a preset desired conveyance velocity is maintained.

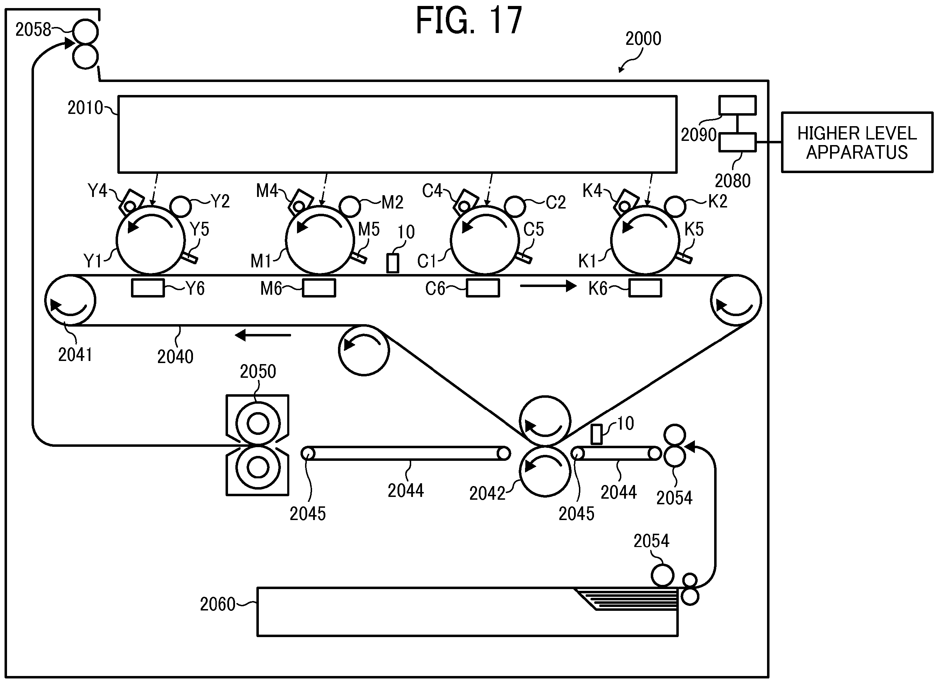

In addition, in the above-described embodiment, as illustrated in FIG. 17 as an example, another movement information measuring device 10 for measuring movement information of the intermediate transfer belt 2040 may be further provided. In this case, a movement velocity of the intermediate transfer belt 2040 can be controlled to be a desired movement velocity, so that toner images of the respective colors are transferred onto the intermediate transfer belt 2040 at desired timings. As a result, a color shift can be suppressed. In this example, the movement information measuring device 10 is provided between the photoconductor drums M1 and Y1, so that the influence of a difference in velocity is reduced.

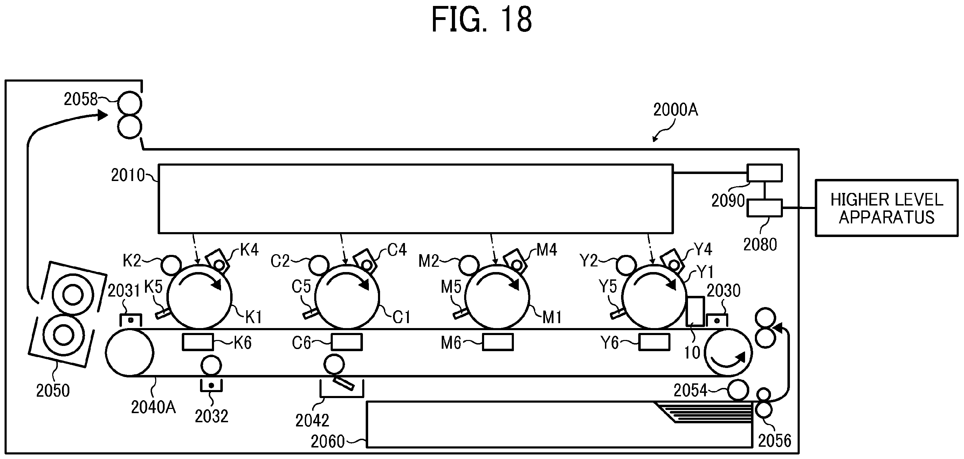

In addition, in the above-described embodiment, the description has been given of a case in which an image forming apparatus is an image forming apparatus of an intermediate transfer belt type. This, however, is not to be construed in a limiting sense. As illustrated in FIG. 18 as an example, an image forming apparatus 2000A of a direct transfer system may be used.

This image forming apparatus 2000A includes a conveyance belt 2040A instead of the intermediate transfer belt 2040. Toner images on the respective photoconductor drums are sequentially transferred onto a recording sheet on the conveyance belt 2040A. In this example, the movement information measuring device 10 is disposed near the conveyance belt 2040A.

In this case, if a print job is requested, the printer control device 2090 obtains, at every predetermined timing, movement information of the conveyance belt 2040A or a recording sheet using the movement information measuring device 10. The printer control device 2090 then controls, based on the movement information of the conveyance belt 2040A or the recording sheet that is obtained from the movement information measuring device 10, a drive roller of the conveyance belt 2040A so that a preset desired movement velocity is maintained.

Thus, in the image forming apparatus 2000A, a desired movement velocity can be stably obtained as a movement velocity of a recording sheet. As a result, a color shift is suppressed, and a high-quality image can be formed.

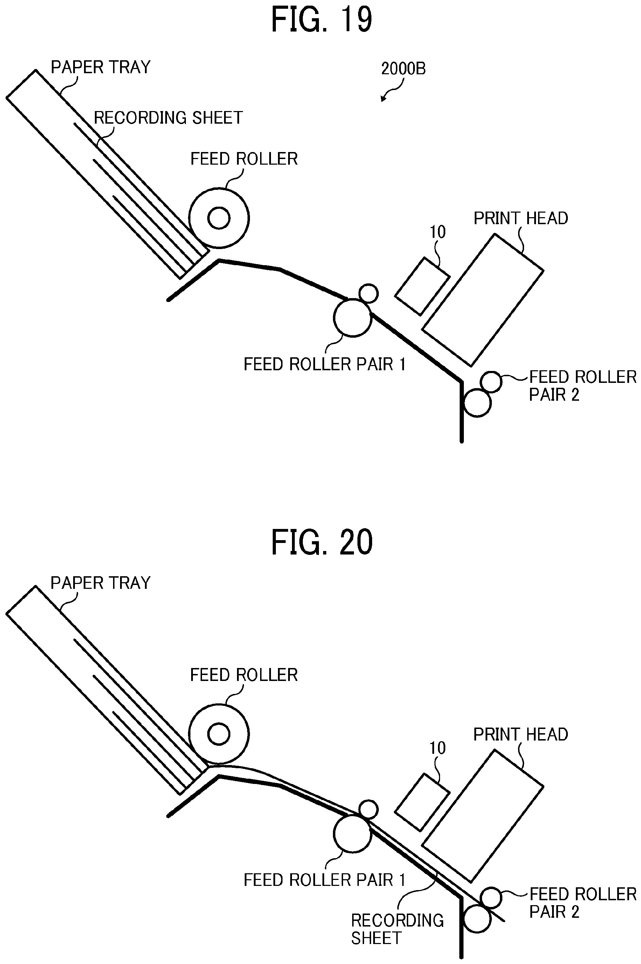

In addition, as illustrated in FIG. 19 as an example, an image forming apparatus may be an image forming apparatus 2000B that directly print pixels onto a recording sheet by a print head for discharging ink. FIG. 19 only illustrates main parts. The print head can move (scan) in a direction orthogonal to a sheet surface of FIG. 19.

Only one of recording sheets stored in a paper tray is taken out by a feed roller, and nipped by a feed roller pair 1 to be fed to a position facing the print head. The recording sheets are further nipped by a feed roller pair 2 (refer to FIG. 20) to be intermittently conveyed.

While performing the above-described movement (scanning), the print head prints pixels onto a recording sheet. While the print head is performing a printing operation, a feeding operation of the recording sheet is paused. Then, once the print head completes one moving (scanning) operation, the recording sheet is fed by each feed roller pair by a predetermined amount. Such a printing operation by the print head and a feeding operation of the recording sheet are repeatedly performed until printing corresponding to one recording sheet is completed.

The movement information measuring device 10 is disposed near the print head, and directly detects a movement velocity and (or) a displacement amount of the recording sheet. Then, a control device (not illustrated) controls each feed roller pair based on the measurement result of the movement information measuring device 10.

In other words, in the image forming apparatus 2000B as well, by using the movement information measuring device 10, a recording sheet can be fed with high accuracy. As a result, image quality can be improved.

In addition, the movement information measuring device 10 can also be used in an image forming apparatus such as a monochrome laser printer, a copying machine, a plotter, a facsimile, and a multifunction peripheral having functions of these devices.

In addition, the movement information measuring device 10 can be used in apparatuses other than an image forming apparatus. For example, the movement information measuring device 10 may be used in an apparatus or a machine having a conveyance mechanism.

For example, the movement information measuring device 10 may be used in an apparatus that conveys a long film material by a conveyance belt, and cuts the film material at every predetermined-length interval. In this case, if the detection accuracy of a movement velocity of the conveyance belt is low, it is difficult to stably cut the film material at every predetermined-length interval. If the movement information measuring device 10 is used with the conveyance belt being a target object, a movement velocity of the conveyance belt can be stably measured with high accuracy. Thus, the long film material can be stably cut at every predetermined-length interval. As a result, a yield ratio can be improved, and the cost can be reduced.

In addition, if the movement information measuring device 10 is used in an apparatus that performs a process on a material being conveyed, at a predetermined position, positional accuracy can be increased, so that quality improvement of products can be achieved.

In addition, for example, in an apparatus that performs a rolling process on a material being conveyed, material characteristics may vary depending on the conveyance velocity of the material. If the movement information measuring device 10 is used in this apparatus while regarding the material being conveyed as a target object, the conveyance velocity of the material can be stably measured with high accuracy. Thus, the conveyance velocity can be controlled with high accuracy. As a result, material characteristics can be stabilized.

Meanwhile, if the conveyance belt slips with respect to a drive roller, if a rotational axis of the drive roller is eccentric, or if vibration generated in a surrounding mechanism is transmitted, an error may be caused in a movement velocity of the conveyance belt. While it is difficult to correct such an error only by modifying a conveyance mechanism, if the movement information measuring device 10 is used, the above-described error can be stably corrected at low cost.

Alternatively, the movement information measuring device 10 may be used in an apparatus or a machine having a conveyance mechanism so as to improve the conveyance accuracy of the conveyance mechanism without increasing cost.

In addition, the movement information measuring device 10 may be used in a traveling body such as an automobile, for example. When automatically operating a traveling body such as an automobile, if the detection accuracy of a traveling velocity and a traveling distance is low, a position of the traveling body that is obtained from the detection result deviates from an actual position of the traveling body. Such deviation may cause a problem. For example, the deviation may lead to a collision accident. In addition, even when a rotational velocity of a shaft coupled to a tire of the traveling body can be detected with high accuracy, if the tire slips on a road surface, the above-described deviation is generated. If the movement information measuring device 10 is mounted in the traveling body, a traveling velocity of the traveling body can be obtained based on a speckle pattern image obtained by irradiating the road surface with coherent light. Thus, even if the tire slips, the generation of the above-described deviation can be suppressed.

In a similar manner, the movement information measuring device 10 may be used in a traveling body that runs in a room.

In addition, for example, the movement information measuring device 10 may be used in an autonomous traveling machine for planetary exploration. The road on which the autonomous traveling machine for planetary exploration runs is in a very bad state, which frequently causes slip and stuck. Furthermore, it is difficult to correctly run the autonomous traveling machine only by controlling the rotational velocity of the tire. In this case, if the movement information measuring device 10 is mounted in the autonomous traveling machine, traveling accuracy can be improved at relatively low cost. In addition, even in a case in which a remote operation is difficult or in a case in which autonomous traveling is desired, highly accurate traveling can be achieved.

In addition, the movement information measuring device 10 may be used for the purpose of measuring acceleration or deceleration of a target object. In this case as well, the acceleration or deceleration of a target object can be stably measured with high accuracy.

In short, the movement information measuring device 10 is preferable for stably and accurately measuring relative movement information of any object that forms a speckle pattern when coherent light is emitted.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of the appended claims.

## Claims

1. A movement information measuring device (10) for measuring movement information of a target object, the movement information measuring device (10) comprising:

   a light source (101) configured to emit light onto the target object;
   an image sensor (120) comprising pixels and configured to capture an image of a speckle pattern generated by light emitted from the light source (101) and reflected by the target object; and
   a processing device (131) configured to obtain movement information of the target object based on a movement amount of the speckle pattern, and to adjust a frame rate and an exposure time in the image sensor (120), and light emission power of the light source based on a movement velocity derived from the movement information of the target object; wherein:

   the frame rate and light emission power are adjusted to be proportional to the movement velocity of the target object and the exposure time is adjusted to be inversely proportional to the movement velocity such that a relationship between a measurement error and a sub pixel movement amount can be fitted by a sine function; and
   the processing device is configured to correct the movement amount of the speckle pattern so that the measurement error is canceled out by reference to the sine function.

**2.** The movement information measuring device (10) according to claim 1, wherein the speckle pattern includes at least two speckle patterns subsequently obtained, and the processing device (131) is configured to calculate a correlation strength between the two speckle patterns, and obtain a movement amount of a peak position of the correlation strength at a resolution equal to or smaller than one pixel of the image sensor (120).

**3.** The movement information measuring device (10) according to claim 2, wherein the processing device (131) is configured to determine a sub-pixel movement amount as the fractional part of the movement amount of the peak position expressed in units of pixels, to obtain a measurement error by referring to a sine function indicating a relationship between the sub-pixel movement amount and a measurement error, and to correct the movement amount of the peak position using the obtained measurement error.

**4.** The movement information measuring device (10) according to any one of claims 1 to 3, wherein the processing device (131) is configured to calculate a movement velocity from the movement amount of the target object and the frame rate and the adjusted frame rate satisfies a relationship $F = k1 \times V$, using the frame rate F, a movement velocity V of the target object, and a coefficient k1.

**5.** The movement information measuring device (10) according to any one of claims 1 to 4, wherein the processing device (131) is configured to calculate a movement velocity from the movement amount of the target object and the frame rate and the adjusted exposure time satisfies a relationship $V \times T = k2$, using the exposure time T, a movement velocity V of the target object, and a coefficient k2.

**6.** The movement information measuring device (10) according to any one of claims 1 to 5, wherein the processing device (131) is configured to calculate a movement velocity from the movement amount of the target object and the frame rate and the adjusted light emission power satisfies a relationship $P = k3 \times V$, using the light emission power P, a movement velocity V of the target object, and a coefficient k3.

**7.** The movement information measuring device (10) according to any one of claims 1 to 6, wherein, prior to measurement of a movement velocity V (n) of the target object between a frame number n, where n is a whole number of 2 or more, and a frame number n+1, the processing device (131) estimates the movement velocity V (n) using a movement velocity of the target object obtained by a frame antecedent to the frame number n, and adjusts the frame rate, the exposure time, and the light emission power based on the estimated movement velocity V (n).

**8.** An apparatus (2000) having a conveyance mechanism for conveying an object, the apparatus comprising:

the movement information measuring device (10) according to any one of claims 1 to 7, a target object of which is at least either one of the object and the conveyance mechanism; and
a controller configured to control the conveyance mechanism based on movement information from the movement information measuring device (10).

**9.** A traveling body for traveling, comprising:

the movement information measuring device (10) according to any one of claims 1 to 8, to measure movement information of the traveling body relative to a target object external of the traveling body; and
a controller configured to control operation of the traveling body based on movement information from the movement information measuring device.

**Patentansprüche**

**1.** Bewegungsinformationsmessvorrichtung (10) zum Messen von Bewegungsinformationen eines Zielobjekts, wobei die Bewegungsinformationsmessvorrichtung (10) Folgendes umfasst:

eine Lichtquelle (101), die konfiguriert ist, um Licht auf das Zielobjekt zu emittieren;
einen Bildsensor (120), der Pixel umfasst und konfiguriert ist, um ein Bild eines Specklemusters aufzunehmen, das durch Licht erzeugt wird, das von der Lichtquelle (101) emittiert wird und von dem Zielobjekt reflektiert wird; und
eine Verarbeitungsvorrichtung (131), die konfiguriert ist, um Bewegungsinformationen des Zielobjekts basierend auf einem Bewegungsbetrag des Specklemusters zu erhalten und um eine Bildfrequenz und eine Belichtungszeit in dem Bildsensor (120) und eine Lichtemissionsleistung der Lichtquelle basierend auf einer Bewegungsgeschwindigkeit anzupassen, die von den Bewegungsinformationen des Zielobjekts abgeleitet wird; wobei:

die Bildfrequenz und Lichtemissionsleistung angepasst sind, um proportional zu der Bewegungsgeschwindigkeit des Zielobjekts zu sein, und die Belichtungszeit angepasst ist, um umgekehrt proportional zu der Bewegungsgeschwindigkeit zu sein, sodass eine Beziehung zwischen einem Messfehler und einem Subpixelbewegungsbetrag durch eine Sinusfunktion hergestellt werden kann; und

die Verarbeitungsvorrichtung konfiguriert ist, um den Bewegungsbetrag des Specklemusters zu korrigieren, sodass der Messfehler anhand der Sinusfunktion aufgehoben wird.

2. Bewegungsinformationsmessvorrichtung (10) nach Anspruch 1, wobei das Specklemuster mindestens zwei Specklemuster enthält, die aufeinanderfolgend erhalten werden, und die Verarbeitungsvorrichtung (131) konfiguriert ist, um eine Korrelationsstärke zwischen den zwei Specklemustern zu berechnen und um einen Bewegungsbetrag einer Position eines Scheitelpunkts der Korrelationsstärke bei einer Auflösung gleich oder kleiner als ein Pixel des Bildsensors (120) zu erhalten.

3. Bewegungsinformationsmessvorrichtung (10) nach Anspruch 2, wobei die Verarbeitungsvorrichtung (131) konfiguriert ist, um einen Subpixelbewegungsbetrag als den Bruchteil des Bewegungsbetrags der in Pixeleinheiten ausgedrückten Position des Scheitelpunkts zu bestimmen, um einen Messfehler anhand einer Sinusfunktion zu erhalten, die eine Beziehung zwischen dem Subpixelbewegungsbetrag und einem Messfehler anzeigt, und um den Bewegungsbetrag der Position des Scheitelpunkts unter Verwendung des erhaltenen Messfehlers zu korrigieren.

4. Bewegungsinformationsmessvorrichtung (10) nach einem der Ansprüche 1 bis 3, wobei die Verarbeitungsvorrichtung (131) konfiguriert ist, um eine Bewegungsgeschwindigkeit aus dem Bewegungsbetrag des Zielobjekts und der Bildfrequenz zu berechnen, und die angepasste Bildfrequenz unter Verwendung der Bildfrequenz F, einer Bewegungsgeschwindigkeit V des Zielobjekts und eines Koeffizienten k1 eine Beziehung $F = k1 \times V$ erfüllt.

5. Bewegungsinformationsmessvorrichtung (10) nach einem der Ansprüche 1 bis 4, wobei die Verarbeitungsvorrichtung (131) konfiguriert ist, um eine Bewegungsgeschwindigkeit aus dem Bewegungsbetrag des Zielobjekts und der Bildfrequenz zu berechnen, und die angepasste Belichtungszeit unter Verwendung der Belichtungszeit T, einer Bewegungsgeschwindigkeit V des Zielobjekts und eines Koeffizienten k2 eine Beziehung $V \times T = k2$ erfüllt.

6. Bewegungsinformationsmessvorrichtung (10) nach einem der Ansprüche 1 bis 5, wobei die Verarbeitungsvorrichtung (131) konfiguriert ist, um eine Bewegungsgeschwindigkeit aus dem Bewegungsbetrag des Zielobjekts und der Bildfrequenz zu berechnen, und die angepasste Lichtemissionsleistung unter Verwendung der Lichtemissionsleistung P, einer Bewegungsgeschwindigkeit V des Zielobjekts und eines Koeffizienten k3 eine Beziehung $P = k3 \times V$ erfüllt.

7. Bewegungsinformationsmessvorrichtung (10) nach einem der Ansprüche 1 bis 6, wobei vor einer Messung einer Bewegungsgeschwindigkeit V (n) des Zielobjekts zwischen einer Bildnummer n, wobei n eine ganze Zahl von 2 oder mehr ist, und einer Bildnummer n+1 die Verarbeitungsvorrichtung (131) die Bewegungsgeschwindigkeit V (n) unter Verwendung einer Bewegungsgeschwindigkeit des Zielobjekts schätzt, die durch ein der Bildnummer n vorangehendes Bild erhalten wird, und die Bildfrequenz, die Belichtungszeit und die Lichtemissionsleistung basierend auf der geschätzten Bewegungsgeschwindigkeit V (n) anpasst.

8. Vorrichtung (2000) mit einem Transportmechanismus zum Transportieren eines Objekts, wobei die Vorrichtung Folgendes umfasst:

die Bewegungsinformationsmessvorrichtung (10) nach einem der Ansprüche 1 bis 7, von der ein Zielobjekt mindestens eines von dem Objekt und dem Transportmechanismus ist; und
eine Steuerung, die konfiguriert ist, um den Transportmechanismus basierend auf Bewegungsinformationen von der Bewegungsinformationsmessvorrichtung (10) zu steuern.

9. Fahrkörper zum Fahren, umfassend:

die Bewegungsinformationsmessvorrichtung (10) nach einem der Ansprüche 1 bis 8, um Bewegungsinformationen des Fahrkörpers relativ zu einem Zielobjekt zu messen, das sich außerhalb des Fahrkörpers befindet; und
eine Steuerung, die konfiguriert ist, um einen Betrieb des Fahrkörpers basierend auf Bewegungsinformationen von der Bewegungsinformationsmessvorrichtung zu steuern.

**Revendications**

1. Dispositif de mesure d'informations de mouvement (10) destiné à mesurer des informations de mouvement d'un objet cible, le dispositif de mesure d'informations de mouvement (10) comprenant :

   une source lumineuse (101) conçue pour émettre la lumière sur l'objet cible ;
   un capteur d'image (120) comprenant des pixels et conçu pour capturer une image d'une figure de speckle générée par la lumière émise depuis la source lumineuse (101) et réfléchie par l'objet cible ; et
   un dispositif de traitement (131) conçu pour obtenir des informations de mouvement de l'objet cible en fonction d'une quantité de mouvement de la figure de speckle, et pour ajuster une fréquence de trame et un temps d'exposition dans le capteur d'image (120) et une puissance d'émission de lumière de la source lumineuse en fonction d'une vitesse de mouvement obtenue à partir des informations de mouvement de l'objet cible ;
   la fréquence de trame et la puissance d'émission de lumière étant ajustées pour être proportionnelles à la vitesse de mouvement de l'objet cible et le temps d'exposition étant ajusté pour être inversement proportionnel à la vitesse de mouvement de manière qu'un rapport entre une erreur de mesure et une quantité de mouvement de sous-pixels peut être fixé par une fonction sinusoïdale ; et
   le dispositif de traitement étant conçu pour corriger la quantité de mouvement de la figure de speckle de manière que l'erreur de mesure est neutralisée par référence à la fonction sinusoïdale.

2. Dispositif de mesure d'informations de mouvement (10) selon la revendication 1, dans lequel la figure de speckle comprend au moins deux figures de speckle obtenues ultérieurement, et le dispositif de traitement (131) est conçu pour calculer une force de corrélation entre les deux figures de speckle, et obtenir une quantité de mouvement d'une position maximale de la force de corrélation à une résolution égale ou inférieure à un pixel du capteur d'image (120).

3. Dispositif de mesure d'informations de mouvement (10) selon la revendication 2, dans lequel le dispositif de traitement (131) est conçu pour déterminer une quantité de mouvement de sous-pixels en tant que partie fractionnaire de la quantité de mouvement de la position maximale exprimée en unités de pixels, pour obtenir une erreur de mesure par référence à une fonction sinusoïdale indiquant un rapport entre la quantité de mouvement de sous-pixels et une erreur de mesure, et pour corriger la quantité de mouvement de la position maximale à l'aide de l'erreur de mesure obtenue.

4. Dispositif de mesure d'informations de mouvement (10) selon l'une quelconque des revendications 1 à 3, dans lequel le dispositif de traitement (131) est conçu pour calculer une vitesse de mouvement à partir de la quantité de mouvement de l'objet cible et de la fréquence de trame, et la fréquence de trame ajustée satisfait une relation $F = k1 \times V$, avec la fréquence de trame F, une vitesse de mouvement V de l'objet cible et un coefficient k1.

5. Dispositif de mesure d'informations de mouvement (10) selon l'une quelconque des revendications 1 à 4, dans lequel le dispositif de traitement (131) est conçu pour calculer une vitesse de mouvement à partir de la quantité de mouvement de l'objet cible et de la fréquence de trame, et le temps d'exposition ajusté satisfait une relation $V \times T = k2$, avec le temps d'exposition T, une vitesse de mouvement V de l'objet cible et un coefficient k2.

6. Dispositif de mesure d'informations de mouvement (10) selon l'une quelconque des revendications 1 à 5, dans lequel le dispositif de traitement (131) est conçu pour calculer une vitesse de mouvement à partir de la quantité de mouvement de l'objet cible et de la fréquence de trame, et la puissance d'émission de lumière ajustée satisfait une relation $P = k3 \times V$, avec la puissance d'émission de lumière P, une vitesse de mouvement V de l'objet cible et un coefficient k3.

7. Dispositif de mesure d'informations de mouvement (10) selon l'une quelconque des revendications 1 à 6, dans lequel, avant la mesure d'une vitesse de mouvement V (n) de l'objet cible entre un nombre de trames n, où n est un nombre entier de 2 ou plus, et un nombre de trames n + 1, le dispositif de traitement (131) estime la vitesse de mouvement V (n) à l'aide d'une vitesse de mouvement de l'objet cible obtenue par un cadre précédent le nombre de trames n et ajuste la vitesse de trame, le temps d'exposition et la puissance d'émission de lumière en fonction de la vitesse de mouvement estimée V (n).

8. Appareil (2000) présentant un mécanisme d'acheminement destiné à acheminer un objet, l'appareil comprenant :

   le dispositif de mesure d'informations de mouvement (10) selon l'une quelconque des revendications 1 à 7, un objet cible duquel est l'objet et/ou le mécanisme d'acheminement ; et
un dispositif de commande conçu pour commander le mécanisme d'acheminement en fonction d'informations de mouvement provenant du dispositif de mesure d'informations de mouvement (10).

9. Corps de déplacement, destiné à se déplacer, comprenant :

le dispositif de mesure d'informations de mouvement (10) selon l'une quelconque des revendications 1 à 8, pour mesurer les informations de mouvement du corps de déplacement par rapport à un objet cible externe au corps de déplacement ; et
un dispositif de commande conçu pour commander le fonctionnement du corps de déplacement en fonction d'informations de mouvement provenant du dispositif de mesure d'informations de mouvement.

FIG. 1

# FIG. 2

## FIG. 3

## FIG. 4

## FIG. 5

FIG. 6

MEASUREMENT ERROR [%] vs SUB PIXEL MOVEMENT AMOUNT [pixel/frame]

FIG. 7

MEASUREMENT ERROR [%] vs SUB PIXEL MOVEMENT AMOUNT [pixel/frame]

FIG. 8

MEASUREMENT ERROR [%] vs SUB PIXEL MOVEMENT AMOUNT [pixel/frame]

## FIG. 9

## FIG. 10

## FIG. 11

## FIG. 12

Graph — y-axis: OPTIMUM EXPOSURE TIME [$\mu$ sec], range 0 to 350; x-axis: RECIPROCAL OF MOVEMENT VELOCITY OF TARGET OBJECT [sec/mm], range 0 to 0.04.

($R^2$=0.9329)

OPTIMUM EXPOSURE TIME = 9010.6 × RECIPROCAL OF MOVEMENT VELOCITY OF TARGET OBJECT

## FIG. 13

Graph — y-axis: OPTIMUM LIGHT EMISSION POWER [mW], range 0 to 20; x-axis: MOVEMENT VELOCITY OF TARGET OBJECT [mm/sec], range 0 to 120.

($R^2$=0.9796)

OPTIMUM LIGHT EMISSION POWER = 0.1529 × MOVEMENT VELOCITY OF TARGET OBJECT

## FIG. 14

Graph — y-axis: MEASUREMENT ERROR [%], range -0.1 to 0.3; x-axis: SUB PIXEL MOVEMENT AMOUNT [pixel/frame], range 0 to 1.0.

◆ : ACTUAL MEASUREMENT VALUE

▨ : SINE FUNCTION APPROXIMATED VALUE

# FIG. 15

START

SET DEFAULT VALUES OF FRAME RATE, EXPOSURE TIME, AND LIGHT EMISSION POWER — S401

$n \leftarrow 1$ — S403

TURN ON LIGHT SOURCE — S405

G (n) RECEIVED? — S407
NO / YES

STORE G (n) INTO MEMORY — S409

B

$n \leftarrow n + 1$ — S411

G (n) RECEIVED? — S413
NO / YES

STORE G (n) INTO MEMORY — S415

CALCULATE CORRELATION STRENGTH BETWEEN G (n) AND G (n−1) — S417

REDUCE BACKGROUND NOISE — S419

A

# FIG. 16

(A)

S501 — OBTAIN FITTING FUNCTION INDICATING RELATIONSHIP BETWEEN CORRELATION STRENGTH AND PIXEL POSITION

S503 — OBTAIN MOVEMENT AMOUNT OF PEAK POSITION

S505 — OBTAIN SUB PIXEL MOVEMENT AMOUNT

S507 — OBTAIN MEASUREMENT ERROR ACCORDING TO SUB PIXEL MOVEMENT AMOUNT BASED ON SINE FUNCTION

S509 — CORRECT MOVEMENT AMOUNT OF PEAK POSITION ACCORDING TO MEASUREMENT ERROR

S511 — CALCULATE MOVEMENT AMOUNT OF TARGET OBJECT THROUGH MAGNIFICATION CORRECTION

S513 — CALCULATE MOVEMENT VELOCITY OF TARGET OBJECT

S515 — OBTAIN OPTIMUM FRAME RATE, OPTIMUM EXPOSURE TIME, AND OPTIMUM LIGHT EMISSION POWER ACCORDING TO MOVEMENT VELOCITY OF TARGET OBJECT

S517 — ADJUST FRAME RATE, EXPOSURE TIME, AND LIGHT EMISSION POWER TO RESPECTIVE OPTIMUM VALUES

S519 — TRANSMIT MOVEMENT VELOCITY OF TARGET OBJECT AND VALUE OF n TO PRINTER CONTROL DEVICE

S521 — COMPLETION REQUEST RECEIVED? — NO → (B)

YES

S523 — TURN OFF LIGHT SOURCE

END

FIG. 17

# FIG. 18

# FIG. 19

PAPER TRAY

2000B

RECORDING SHEET

FEED ROLLER

PRINT HEAD

10

FEED ROLLER PAIR 1

FEED ROLLER PAIR 2

# FIG. 20

PAPER TRAY

FEED ROLLER

PRINT HEAD

10

FEED ROLLER PAIR 1

FEED ROLLER PAIR 2

RECORDING SHEET

## REFERENCES CITED IN THE DESCRIPTION

### Patent documents cited in the description

- JP 2010055064 A
- WO 2006065461 A2
- EP 2270517 A1
- EP 1703249 A1

### Non-patent literature cited in the description

- **TAKAURA.** Development of Laser Speckle-Based Displacement Sensor with High Accuracy. *Ricoh Technical Report,* January 2014, 40-48